(19)

Europäisches
Patentamt
European
Patent Office
Office européen
des brevets

(11) **EP 4 678 497 A1**

(12) **EUROPEAN PATENT APPLICATION**
published in accordance with Art. 153(4) EPC

(43) Date of publication:
**14.01.2026 Bulletin 2026/03**

(21) Application number: **24783984.8**

(22) Date of filing: **26.02.2024**

(51) International Patent Classification (IPC):
**B60W 60/00** *(2020.01)* **B60W 50/08** *(2020.01)*
**B60W 40/09** *(2012.01)* **G05D 1/00** *(2024.01)*

(52) Cooperative Patent Classification (CPC):
**B60W 40/09; B60W 50/08; B60W 60/00; G05D 1/00**

(86) International application number:
**PCT/CN2024/078614**

(87) International publication number:
**WO 2024/207899 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2023 CN 202310389188**

(71) Applicant: **Shenzhen Yinwang Intelligent
Technologies Co., Ltd.
Shenzhen, Guangdong 518110 (CN)**

(72) Inventors:
• **LUO, Qi**
 **Shenzhen, Guangdong 518129 (CN)**
• **CHEN, Yongshang**
 **Shenzhen, Guangdong 518129 (CN)**
• **DENG, Xiren**
 **Shenzhen, Guangdong 518129 (CN)**
• **WANG, Xinyu**
 **Shenzhen, Guangdong 518129 (CN)**

(74) Representative: **Gill Jennings & Every LLP
The Broadgate Tower
20 Primrose Street
London EC2A 2ES (GB)**

(54) **INTELLIGENT DRIVING METHOD AND RELATED APPARATUS**

(57) An intelligent driving method and a related apparatus are provided, and relate to the field of intelligent driving technologies. The method includes: obtaining vehicle status information; and when a vehicle needs to be taken over by a driver, determining a takeover threshold on a steering wheel based on the vehicle status information, where when a torque value applied by the driver to the steering wheel is greater than the takeover threshold, a driving direction of the vehicle is completely controlled by the driver. The takeover threshold on the steering wheel may be determined with reference to the vehicle status information of the vehicle in a driving process. Therefore, the takeover threshold on the steering wheel may vary with a vehicle status. For example, the takeover threshold may vary with a vehicle speed, and accordingly, difficulty for the driver in taking over the steering wheel may also vary. Therefore, the takeover threshold on the steering wheel determined with reference to the vehicle status information is no longer limited to a fixed takeover threshold, and may be adaptively adjusted based on different vehicle status information, to adapt to more driving scenarios and environments. In this way, intelligence is high.

<u>200</u>

210: Obtain vehicle status information

220: When a vehicle needs to be taken over by a driver, determine a takeover threshold on a steering wheel based on the vehicle status information

FIG. 2

**Description**

This application claims priority to Chinese Patent Application No. 202310389188.2, filed with the China National Intellectual Property Administration on April 3, 2023 and entitled "INTELLIGENT DRIVING METHOD AND RELATED APPARATUS", which is incorporated herein by reference in its entirety.

**TECHNICAL FIELD**

This application relates to the field of intelligent driving technologies, and in particular, to an intelligent driving method and a related apparatus.

**BACKGROUND**

With continuous development of intelligent driving technologies, commercialization of intelligent driving vehicles has become an inevitable trend. In a current autonomous driving technology, a driver needs to intervene in a vehicle behavior timely in some complex driving scenarios. For example, in some scenarios, the driver needs to take over a steering wheel for controlling a vehicle, to participate in controlling a driving direction of the vehicle.

In a current intelligent driving method, when a torque value applied by the driver to the steering wheel does not exceed a preset takeover threshold, the driving direction of the vehicle is not controlled by the driver, and the driving direction of the vehicle is completely controlled by the vehicle; and when the torque value applied by the driver to the steering wheel exceeds the preset takeover threshold, an autonomous driving mode is exited, and the driving direction of the vehicle is completely controlled by the driver. However, in this intelligent driving method, the takeover threshold is a value preset by a skilled person based on experience, and cannot adapt to all driving scenarios and environments; and intelligence is not high enough.

**SUMMARY**

This application provides an intelligent driving method and a related apparatus, to improve intelligence of a vehicle.

According to a first aspect, this application provides an intelligent driving method. The method is applied to a vehicle. The method may be performed by the vehicle, or may be performed by a component configured inside the vehicle, for example, a processor, a chip, or a chip system, or may be implemented by a logical module, software, or the like that has some or all functions of the vehicle. This is not limited in this application.

The method includes: obtaining vehicle status information; and when a vehicle needs to be taken over by a driver, determining a takeover threshold on a steering wheel based on the vehicle status information, where when a torque value applied by the driver to the steering wheel is greater than the takeover threshold, a driving direction of the vehicle is completely controlled by the driver.

In this solution, the takeover threshold on the steering wheel may be determined with reference to the vehicle status information of the vehicle in a driving process. Therefore, the takeover threshold on the steering wheel may vary with a vehicle status. For example, the takeover threshold may vary with a vehicle speed, and accordingly, difficulty for the driver in taking over the steering wheel may also vary. The takeover threshold on the steering wheel is no longer limited to a fixed takeover threshold, and may be adaptively adjusted based on different vehicle status information, to adapt to more driving scenarios and environments, so that intelligence is high.

With reference to the first aspect, in some possible implementations, when the torque value applied by the driver to the steering wheel is less than or equal to the takeover threshold, the driving direction of the vehicle is completely controlled by the vehicle.

To be specific, when the torque value applied by the driver to the steering wheel is small, and the torque value does not exceed the takeover threshold, the torque value applied by the driver to the steering wheel cannot produce control effect on the driving direction of the vehicle, and the driving direction of the vehicle is still controlled by the vehicle.

With reference to the first aspect, in some possible implementations, the method further includes: obtaining environment information of an environment in which the vehicle is located; and when the vehicle needs to be taken over by the driver, determining an intervention threshold on the steering wheel based on the environment information, where when the torque value is greater than the intervention threshold and less than or equal to the takeover threshold, the driving direction of the vehicle is jointly controlled by the driver and the vehicle; or when the torque value is less than or equal to the intervention threshold, the driving direction of the vehicle is completely controlled by the vehicle.

In other words, the intervention threshold is a minimum torque value at which the driver can intervene in the driving direction of the vehicle.

Based on the intervention threshold and the takeover threshold, controlling on the vehicle may be divided into three levels: When the torque value applied by the driver to the steering wheel is small, and the torque value does not exceed the intervention threshold, the torque value applied by the driver to the steering wheel cannot produce control effect on the driving direction of the vehicle, and the driving direction of the vehicle is completely controlled by the vehicle; when the torque value exceeds the intervention threshold but does not exceed the takeover threshold, the driving direction of the vehicle is jointly controlled by the driver and the vehicle; and when the torque value exceeds the takeover threshold, the driving direction of the vehicle is completely controlled by the driver.

The environment information is introduced. In consideration of a fact that the left environmental risk and the right environmental risk may be different, a left intervention coefficient may be different from a right intervention coefficient. Intervention difficulty in the driving direction on a side with a larger value of the intervention coefficient is greater than that on a side with a smaller value of the intervention coefficient, to improve safety of taking over the steering wheel by the driver.

With reference to the first aspect, in some possible implementations, the method further includes: determining an intervention coefficient based on the environment information, the vehicle status information, and the torque value, where the intervention coefficient indicates a weight of intervention of the torque value in the driving direction of the vehicle; determining a target value based on the torque value, the intervention coefficient, and an expected value, where the expected value indicates a steering direction and a steering angle that the vehicle expects to perform, and the target value indicates a steering direction and a steering angle that are used to control the driving direction of the vehicle; and controlling the driving direction of the vehicle based on the target value.

Optionally, an intervention coefficient K meets:

$$
K = \begin{cases}
\dfrac{\left|Tq_{Driver}\right| - \left|Tq_{InRu}^{L}\right|}{Tq_{TkOvr} - \left|Tq_{InRu}^{L}\right|}, & Tq_{InRu}^{L} \leq Tq_{Driver} < Tq_{TkOvr} \\[3ex]
\dfrac{\left|Tq_{Driver}\right| - \left|Tq_{InRu}^{R}\right|}{Tq_{TkOvr} - \left|Tq_{InRu}^{R}\right|}, & -Tq_{TkOvr} \leq Tq_{Driver} < Tq_{InRu}^{R}, \\[3ex]
1, & \left|Tq_{Driver}\right| > Tq_{TkOvr} \\[2ex]
0, & Tq_{InRu}^{R} \leq Tq_{Driver} \leq Tq_{InRu}^{L}
\end{cases}
$$

where K indicates the intervention coefficient, $Tq_{Driver}$ indicates the torque value, $Tq_{TkOvr}$ indicates the takeover threshold, $Tq_{InRu}^{L}$ indicates a left intervention threshold, and $Tq_{InRu}^{R}$ indicates a right intervention threshold.

Optionally, the takeover threshold meets: $Tq_{TkOvr} = Tq_{base} \times P_{veh}^{TkOvr}$, where $Tq_{TkOvr}$ indicates the takeover threshold, $P_{veh}^{TkOvr}$ indicates a vehicle status takeover coefficient, $Tq_{base}$ indicates a basic takeover coefficient, and $Tq_{base}$ is a preset constant.

Optionally, the left intervention threshold meets: $Tq_{InRu}^{L} = Tq_{InRu}^{base} \times P_{env}^{L} \times P_{veh}^{InRu}$, and the right intervention threshold meets: $Tq_{InRu}^{R} = Tq_{InRu}^{base} \times P_{env}^{R} \times P_{veh}^{InRu}$, where $Tq_{InRu}^{L}$ indicates the left intervention threshold, $P_{env}^{L}$ indicates a left environmental risk coefficient, $Tq_{InRu}^{R}$ indicates the right intervention threshold, $P_{env}^{R}$ indicates a right environmental risk coefficient, $P_{veh}^{InRu}$ indicates a vehicle status intervention coefficient, $Tq_{InRu}^{base}$ indicates a basic intervention coefficient, and $Tq_{InRu}^{base}$ is a preset constant.

Optionally, the target value meets: Tq_sum = (1-K) $\times$ Tq_1+K$\times$Tq$_{Driver}$, where Tq_sum indicates the target value, Tq_1 indicates the expected value, Tq$_{Driver}$ indicates the torque value, and K indicates the intervention coefficient.

With reference to the first aspect, in some possible implementations, the method further includes: In a process in which the vehicle starts emergency braking or an intelligent driving system is in downgrading, the environmental risk coefficient is a default value.

When function downgrading occurs at a current autonomous driving level of the vehicle due to an emergency, or the environmental risk coefficient obtained through calculation is unreliable, the environmental risk coefficient may be set to the default value, to ensure that the driver can smoothly take over the vehicle in an emergency, so as to improve safety of intelligent driving.

According to a second aspect, this application provides an intelligent driving method. The method is applied to a vehicle. The method may be performed by a component configured inside the vehicle, for example, a processor, a chip, or a chip system, or may be implemented by a logical module, software, or the like that has some or all functions of the vehicle. This is not limited in this application.

For example, the method includes: obtaining vehicle status information; when a vehicle needs to be taken over by a driver, determining a takeover threshold on a steering wheel based on the vehicle status information; when a torque value applied by the driver to the steering wheel is greater than the takeover threshold, determining that a value of an intervention coefficient is 1, where the intervention coefficient indicates a weight of intervention of the torque value in a driving direction of the vehicle; and outputting an expected value and the intervention coefficient, where the expected value indicates a steering direction and a steering angle that the vehicle expects to perform.

Based on the foregoing technical solution, the takeover threshold on the steering wheel may be determined with reference to the vehicle status information of the vehicle in a driving process. Therefore, the takeover threshold on the steering wheel may vary with a vehicle status. For example, the takeover threshold may vary with a vehicle speed, and accordingly, difficulty for the driver in taking over the steering wheel may also vary. The takeover threshold on the steering wheel is no longer limited to a fixed takeover threshold, and may be adaptively adjusted based on different vehicle status information, to adapt to more driving scenarios and environments, so that intelligence is high.

With reference to the second aspect, in some possible implementations, when the torque value applied by the driver to the steering wheel is less than or equal to the takeover threshold, it is determined that the value of the intervention coefficient is 0.

With reference to the second aspect, in some possible implementations, the method further includes: obtaining environment information of an environment in which the vehicle is located; when the vehicle needs to be taken over by the driver, determining an intervention threshold on the steering wheel based on the environment information; and when the torque value is greater than the intervention threshold and less than or equal to the takeover threshold, calculating the value of the intervention coefficient based on the environment information, the vehicle status information, and the torque value, where the value of the intervention coefficient is greater than 0 and less than 1; or when the torque value is less than or equal to the intervention threshold, determining that the value of the intervention coefficient is 0.

According to a third aspect, this application provides an intelligent driving method. The method is applied to a vehicle. The method may be performed by a component configured inside the vehicle, for example, a processor, a chip, or a chip system, or may be implemented by a logical module, software, or the like that has some or all functions of the vehicle. This is not limited in this application.

For example, the method includes: obtaining a torque value, an expected value, and an intervention coefficient, where the torque value is a value of a torque generated by a force applied by a driver to a steering wheel, the expected value indicates a steering direction and a steering angle that a vehicle expects to perform, and the intervention coefficient indicates a weight of intervention of the torque value in a driving direction of the vehicle; determining a target value based on the torque value, the expected value, and the intervention coefficient, where the target value indicates a steering direction and a steering angle that are used to control the driving direction of the vehicle; and controlling the driving direction of the vehicle based on the target value.

Based on the foregoing technical solution, the takeover threshold on the steering wheel is no longer limited to a fixed takeover threshold, and may be adaptively adjusted based on different vehicle status information, to adapt to more driving scenarios and environments. The intervention coefficient is obtained based on a non-fixed takeover threshold and intervention threshold, so that intelligence is high. In addition, based on the intervention coefficient and in comprehensive consideration with the expected value and the torque value applied by the driver to the steering wheel, the driving direction of the vehicle may be jointly controlled by the driver and the vehicle, and may further response to a torque generated due to the torque value applied by the driver to the steering wheel while control precision is ensured, so that user experience can be improved.

According to a fourth aspect, this application provides an intelligent driving apparatus. The apparatus includes modules or units configured to implement the method in the first aspect and any one of the possible implementations of the first aspect, includes modules or units configured to implement the method according to the second aspect and any one of the possible implementations of the second aspect, or includes modules or units configured to implement the method according to the third aspect. It should be understood that the modules or units may implement corresponding functions by executing computer programs.

According to a fifth aspect, this application provides an intelligent driving apparatus. The apparatus includes a processor and a communication interface. The processor is coupled to the communication interface, and may be configured to execute a computer program, to implement the method in the first aspect and any one of the possible implementations of the first aspect, or implement the method in the second aspect and any one of the possible implementations of the second aspect, or implement the method in the third aspect.

Optionally, the apparatus further includes a memory, and the processor is coupled to the memory.

According to a sixth aspect, this application provides a vehicle. The vehicle includes the apparatus according to the fourth aspect or the fifth aspect.

According to a seventh aspect, this application provides a chip system. The chip system includes a processor, configured to support implementation of functions in the first aspect or any one of the possible implementations of the first aspect, configured to support implementation of functions in the second aspect or any one of the possible implementations of the second aspect, or configured to support implementation of functions in the third aspect, for example, receiving or processing data and/or information in the foregoing method.

In a possible design, the chip system further includes a memory. The memory is configured to store program instructions and data. The memory is located inside the processor or outside the processor.

The chip system may include a chip, or may include a chip and another discrete component.

According to an eighth aspect, this application provides a computer-readable storage medium. The computer storage medium stores a computer program (which may also be referred to as code or an instruction). When the computer program is run by a processor, the method in the first aspect and any one of the possible implementations of the first aspect is performed, the method in the second aspect and any one of the possible implementations of the second aspect is performed, or the method in the third aspect is performed.

According to a ninth aspect, this application provides a computer program product. The computer program product includes a computer program (which may also be referred to as code or an instruction). When the computer program is run, the method in the first aspect and any one of the possible implementations of the first aspect is performed, the method in the second aspect and any one of the possible implementations of the second aspect is performed, or the method in the third aspect is performed.

It should be understood that technical solutions of the fourth aspect to the ninth aspect of this application correspond to the technical solutions of the first aspect to the third aspect of this application, and beneficial effects achieved by the aspects and corresponding feasible implementations are similar. Details are not described again.

## BRIEF DESCRIPTION OF DRAWINGS

FIG. 1 is a block diagram of an apparatus used in an intelligent driving method according to an embodiment of this application;

FIG. 2 is a schematic flowchart of an intelligent driving method according to an embodiment of this application;

FIG. 3 is a diagram of a correspondence between a value of an intervention coefficient, and an intervention threshold and a takeover threshold;

FIG. 4 is a diagram of determining a target value according to an embodiment of this application;

FIG. 5 is a diagram of a scenario of an environmental risk;

FIG. 6 is another schematic flowchart of an intelligent driving method according to an embodiment of this application; and

FIG. 7 is another schematic flowchart of an intelligent driving method according to an embodiment of this application.

## DESCRIPTION OF EMBODIMENTS

The following describes technical solutions of this application with reference to accompanying drawings.

To clearly describe the technical solutions in embodiments of this application, the following descriptions are first provided.

First, in embodiments of this application, descriptions such as "when", "in a case in which", "if", and "it is assumed that" all mean that an apparatus (for example, a vehicle) performs corresponding processing in an objective case, are not intended to limit time, do not require the apparatus to necessarily have a determining action during implementation, and do not mean that there is another limitation. It should be noted that the foregoing several descriptions in embodiments of this application may be relatedly replaced. This is not limited.

Second, in embodiments of this application, terms "include", "contain", and any other variant thereof are intended to cover a non-exclusive inclusion. For example, an apparatus, system, product, or device that includes a series of assemblies, modules, or units is not necessarily limited to those assemblies, modules, or units that are clearly listed, but may include other assemblies, modules, or units that are not explicitly listed or are inherent to such an apparatus, system, product, or device.

Third, in embodiments of this application, "and/or" describes an association relationship between associated objects, and indicates that three relationships may exist. For example, A and/or B may indicate the following cases: Only A exists, both A and B exist, and only B exists, where A and B may be singular or plural. A character "/" usually indicates an "or" relationship between associated objects, but does not exclude an "and" relationship between the associated objects.

A specific meaning indicated by the character "/" may be understood with reference to the context.

Fourth, in embodiments of this application, the term "example", "for example", or the like is used to give an example, an illustration, or a description. Any embodiment or design scheme described with "example" or "for example" in embodiments of this application should not be explained as being more preferred or having more advantages than another embodiment or design scheme. Exactly, use of the word "example", "for example", or the like is intended to present a relative concept in a specific manner.

For ease of understanding the method provided in this application, the following describes in detail classification of levels of an autonomous driving technology.

Currently, in the field of intelligent driving, levels of autonomous driving provided by the society of automotive engineers (society of automotive engineers, SAE) SAE J3016 are widely used. According to the SAE's levels, the autonomous driving technology is classified into six levels from L0 to L5 in ascending order. The level L0 indicates lowest automation, and the level L5 indicates full automation (to be specific, no driver intervention is required under all conditions). In the SAE, the level L0 to the level L2 are named "driver support features" (driver support features), and the level L3 to the level L5 are named "automated driving features" (automated driving features).

For the level L0, a driver is the only operator of a vehicle and needs to control all control apparatuses such as a steering wheel, a throttle, and a brake, but active safety functions such as autonomous emergency braking (autonomous emergency braking, AEB) can be provided.

For the level L1 and the level L2, the driver is still the only operator of the vehicle, and needs to control all control apparatuses such as the steering wheel, the throttle, and the brake, but more auxiliary/support functions such as adaptive cruise or lane holding can be provided.

For the level L3, an autonomous driving system of the vehicle may drive the vehicle in some cases. For example, when traffic congestion occurs, the vehicle may automatically drive by using a traffic jam chauffeur (traffic jam chauffeur) function. In this case, the driver does not need to drive the vehicle. The driver needs to take over the vehicle when necessary.

For the level L4, the driver does not need to take over the vehicle usually. An area driverless taxi (driverless taxi) is a typical level L4 autonomous driving scenario.

The level L5 indicates full automation under any condition and is an ultimate ideal level of autonomous driving. Currently, only some vehicles can implement an L2 autonomous driving technology, and the technology is still being continuously improved.

It should be understood that the vehicle meeting method described below may be applied to an autonomous driving vehicle at the level L2 or below, and may also be applied to a future autonomous driving vehicle at the level L3 or above. This is not limited in embodiments of this application. It should be further understood that in the future autonomous driving vehicle at the level L3 or above, the vehicle can implement most driving functions. When it is found that the driver is about to be in a fatigue state, a reminder may be sent to the driver, so that the driver takes over the vehicle. That the driver takes over the vehicle means that the driver manually drives the vehicle without vehicle assistance. A mode in which the driver manually drives the vehicle may also be referred to as a manual mode.

In addition, the following briefly describes parameters in embodiments of this application.

K indicates an intervention coefficient, where $0 \leq K \leq 1$.

$Tq_{InRu}$ indicates an intervention threshold. $Tq_{InRu}^{L}$ indicates a left intervention threshold. $Tq_{InRu}^{R}$ indicates a right intervention threshold.

$Tq_{TkOvr}$ indicates a takeover threshold.

$-Tq_{TkOvr}$ indicates a negative value of a takeover threshold. $P_{veh}^{InRu}$ indicates a vehicle status intervention coefficient. $P_{veh}^{TkOvr}$ indicates a vehicle status takeover coefficient. $P_{env}^{L}$ indicates a left environmental risk coefficient. $P_{env}^{R}$ indicates a right environmental risk coefficient.

$Tq_{Driver}$ indicates a torque value applied by a driver to a steering wheel.

$Tq_{base}$ indicates a basic takeover coefficient, and is a preset constant. $Tq_{InRu}^{base}$ indicates a basic intervention coefficient, and is a preset constant.

$Tq\_sum$ indicates a target value.

$Tq\_1$ indicates an expected value.

With continuous development of intelligent driving technologies, commercialization of intelligent driving vehicles has become an inevitable trend. In a current autonomous driving technology, a driver needs to intervene in a vehicle behavior timely in some complex driving scenarios. For example, in scenarios such as a complex narrow road, an unprotected left-turn intersection, or a congested traffic lane change, the driver needs to take over a steering wheel for controlling a vehicle, to participate in controlling a driving direction of the vehicle.

In a current intelligent driving method, when a torque value applied by the driver to the steering wheel does not exceed a preset takeover threshold, the driving direction of the vehicle is not controlled by the driver, and the driving direction of the vehicle is completely controlled by the vehicle; and when the torque value applied by the driver to the steering wheel exceeds the preset takeover threshold, an autonomous driving mode is exited, and the driving direction of the vehicle is completely controlled by the driver. However, in this intelligent driving method, the takeover threshold is a fixed value preset by a skilled person based on experience, and cannot adapt to all driving scenarios and environments, and intelligence is not high.

For the foregoing problem, embodiments of this application provide an intelligent driving method and a related apparatus. A fixed takeover threshold is no longer preset, but a takeover threshold on a steering wheel is determined with reference to vehicle status information of a vehicle in a driving process. For example, the takeover threshold may vary with a vehicle speed, and accordingly, difficulty for a driver in taking over the steering wheel may also vary. Therefore, the takeover threshold determined with reference to the vehicle status information can adapt to more driving scenarios and environments, so that intelligence is high.

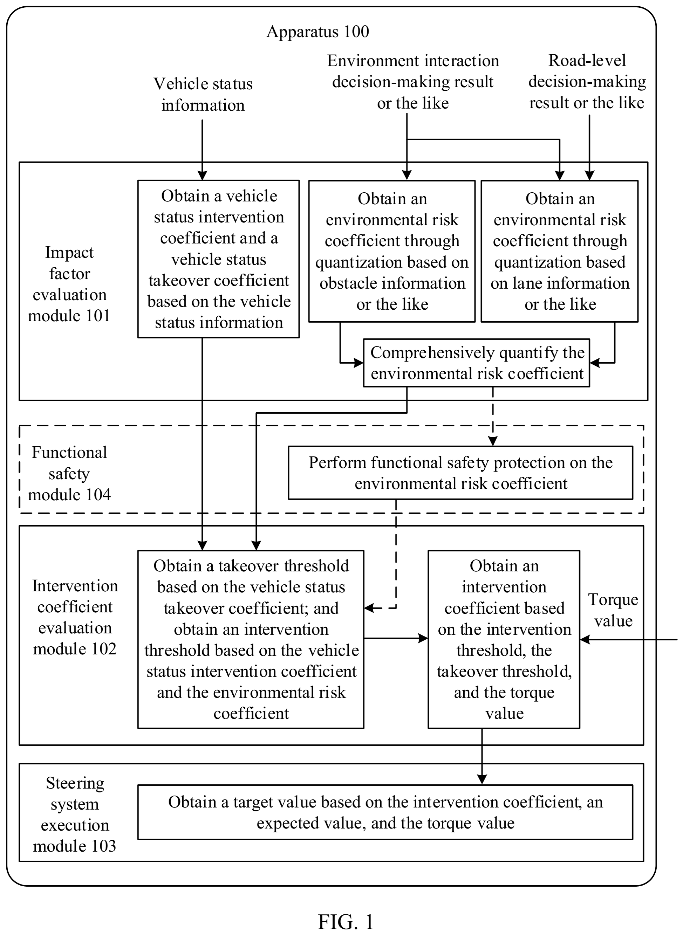

Before the intelligent driving method provided in this application is described in detail, an apparatus applicable to the intelligent driving method provided in this application is first described with reference to FIG. 1.

FIG. 1 is a block diagram of an apparatus used in an intelligent driving method according to an embodiment of this application.

As shown in FIG. 1, an apparatus 100 includes an impact factor evaluation module 101, an intervention coefficient evaluation module 102, a steering system execution module 103, and the like.

After a user activates an autonomous driving system, the impact factor evaluation module 101 may separately perform quantization calculation on environmental risks of left intervention and right intervention based on information such as an existing environment interaction decision-making result and/or an existing lane-level decision-making result and by considering a relative location of a vehicle, to obtain environmental risk coefficients, where the environmental risk coefficients may affect subsequent determining of an intervention threshold on a steering wheel. The impact factor evaluation module 101 may further obtain, based on vehicle status information (including but not limited to a speed, a steering angle, and a steering angle change rate of the vehicle) obtained through measurement by a sensor, a vehicle status intervention coefficient and a vehicle status takeover coefficient through calculation. The vehicle status intervention coefficient may affect subsequent determining of the intervention threshold, and the vehicle status takeover coefficient may affect subsequent determining of a takeover threshold on the steering wheel.

In other words, the impact factor evaluation module 101 may obtain environment information (including but not limited to obstacle information and/or lane information) of an environment in which the vehicle is located, the vehicle status information, and the like from sensors including but not limited to a speed sensor, an angle sensor, a visual sensor, and the like, so that the impact factor evaluation module 101 can obtain the vehicle status intervention coefficient and the vehicle status takeover coefficient based on the vehicle status information through calculation. The impact factor evaluation module 101 may further calculate the environmental risk coefficient based on the environment information.

The intervention coefficient evaluation module 102 may determine the takeover threshold based on the vehicle status takeover coefficient obtained by the impact factor evaluation module 101 through calculation. The intervention coefficient evaluation module 102 may determine the intervention threshold based on the environmental risk coefficient and the vehicle status intervention coefficient. The intervention coefficient evaluation module 102 may calculate, in real time based on the intervention threshold, the takeover threshold, and a torque value applied by a driver to the steering wheel, a weight (for ease of description, the weight is denoted as an intervention coefficient) of intervention of the torque value applied by the driver to the steering wheel in a driving direction of the vehicle, and the intervention coefficient may be output to the steering system execution module 103.

The steering system execution module 103 may reconcile the intervention coefficient output by the intervention coefficient evaluation module 102, an instruction torque (for ease of description, a value of the instruction torque is denoted as an expected value) calculated based on an autonomous driving control system, and the torque value applied by the driver to the steering wheel, to obtain a torque for finally controlling the direction of the vehicle (for ease of description, the torque is denoted as a target value).

In some possible implementations, the apparatus 100 may further include a functional safety module 104. The functional safety module 104 may perform functional safety protection on the environmental risk coefficient based on an autonomous driving status of the vehicle. In other words, when function downgrading occurs at a current autonomous driving level of the vehicle due to an emergency, or the environmental risk coefficient obtained by the impact factor evaluation module 101 through calculation is unreliable due to an exception of an environment monitoring module, the functional safety module 104 may set the environmental risk coefficient to a default value, to ensure that the driver can smoothly take over the vehicle in an emergency.

It may be understood that the intelligent driving method provided in this application may be applied to an intelligent driving control system (which may also be referred to as an advanced driving system (advanced driving system, ADS)) and a chassis domain system (which may also be referred to as an electric power steering (electric power steering, EPS) system). By way of example, but not limitation, the impact factor evaluation module 101, the intervention coefficient evaluation module 102, and the functional safety module 104 may be deployed in the ADS, and the steering system execution module 103 may be deployed in the EPS system.

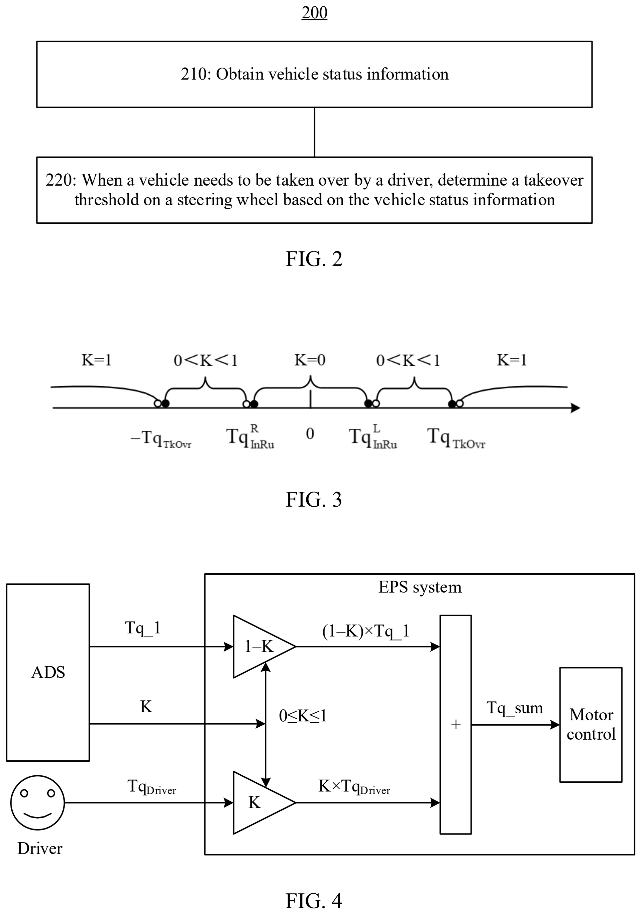

The following describes the intelligent driving method provided in this application with reference to FIG. 2.

FIG. 2 is a schematic flowchart of an intelligent driving method according to an embodiment of this application.

As shown in FIG. 2, the method 200 may include step 210 and step 220. The method 200 is applied to a vehicle. The method 200 may be performed by the vehicle, or may be performed by a component configured inside the vehicle, for example, a processor, a chip, or a chip system, or may be implemented by a logical module, software, or the like that has some or all functions of the vehicle. This is not limited in this application. The following describes in detail the steps in the method 200.

Step 210: Obtain vehicle status information.

It may be understood that a speed sensor, an angle sensor, and the like may be deployed on the vehicle. For example, the vehicle may obtain a driving speed of the vehicle based on the speed sensor, and obtain a driving steering angle, an angle change rate, and the like of the vehicle based on the angle sensor. The vehicle status information includes but is not limited to data such as the speed, the steering angle, and the steering angle change rate of the vehicle.

Step 220: When the vehicle needs to be taken over by a driver, determine a takeover threshold on a steering wheel based on the vehicle status information.

When the vehicle is in an autonomous driving process, and the driver needs to take over the steering wheel of the vehicle, the vehicle may determine the takeover threshold on the steering wheel based on the vehicle status information. In other words, the vehicle may determine the takeover threshold on the steering wheel through calculation based on a current speed, a current steering angle, a current steering angle change rate, and the like of the vehicle. A larger takeover threshold indicates higher difficulty for the driver in taking over the steering wheel. When the vehicle status information varies, the takeover threshold may vary, and accordingly, difficulty for the driver in taking over the steering wheel also varies. For example, in different scenarios such as a scenario in which the vehicle drives in a straight line at a speed above 60 kilometers (kilometers, km)/hour (hour, h), a scenario in which the vehicle drives in a straight line at a speed below 40 km/h, and a scenario in which the vehicle drives at a speed of 20 km/h on a curve with a turning radius less than 40 meters (meters, m), the takeover threshold on the steering wheel varies.

It may be understood that when a torque value applied by the driver to the steering wheel exceeds the takeover threshold, a driving direction of the vehicle is completely controlled by the driver.

In some possible implementations, when the torque value applied by the driver to the steering wheel is less than or equal to the takeover threshold, the driving direction of the vehicle is completely controlled by the vehicle.

To be specific, when the torque value applied by the driver to the steering wheel is small, and the torque value does not exceed the takeover threshold, the torque value applied by the driver to the steering wheel cannot produce control effect on the driving direction of the vehicle, and the driving direction of the vehicle is still controlled by the vehicle.

In some possible implementations, the method 200 further includes: obtaining environment information of an environment in which the vehicle is located; and when the vehicle needs to be taken over by the driver, determining an intervention threshold on the steering wheel based on the environment information, where when the torque value is greater than the intervention threshold and less than or equal to the takeover threshold, the driving direction of the vehicle is jointly controlled by the driver and the vehicle; or when the torque value is less than or equal to the intervention threshold, the driving direction of the vehicle is completely controlled by the vehicle.

It may be understood that a visual sensor and the like may be deployed on the vehicle. For example, the vehicle may obtain, based on the visual sensor, the environment information of the environment in which the vehicle is located. The environment information includes but is not limited to obstacle information, lane information, and/or the like. The obstacle information includes but is not limited to a location of an obstacle relative to the vehicle, and a moving speed and a moving direction of the obstacle; and the lane information includes but is not limited to a shape of a lane line and a relative location between the vehicle and the lane line (for example, whether the vehicle is about to roll on the lane line).

When the vehicle is in the autonomous driving process, and the driver needs to take over the steering wheel of the vehicle, the vehicle may determine the intervention threshold on the steering wheel based on the environment information. In other words, the vehicle may determine the intervention threshold on the steering wheel through calculation based on the obstacle information, the lane information, and/or the like.

In other words, when the vehicle is in the autonomous driving process, and the driver needs to take over the steering wheel of the vehicle, the vehicle may determine the takeover threshold on the steering wheel based on the vehicle status information, and determine the intervention threshold on the steering wheel based on the information about the environment in which the vehicle is located. The intervention threshold is a minimum torque value at which the driver can intervene in the driving direction of the vehicle.

It may be understood that, in this implementation, based on the intervention threshold and the takeover threshold, controlling on the vehicle may be divided into three levels: When the torque value applied by the driver to the steering wheel is small, and the torque value does not exceed the intervention threshold, the torque value applied by the driver to the steering wheel cannot produce control effect on the driving direction of the vehicle, and the driving direction of the vehicle is completely controlled by the vehicle; when the torque value exceeds the intervention threshold but does not exceed the takeover threshold, the driving direction of the vehicle is jointly controlled by the driver and the vehicle; and when the torque value exceeds the takeover threshold, the driving direction of the vehicle is completely controlled by the driver.

In a possible implementation, the method 200 further includes: determining an intervention coefficient based on the environment information, the vehicle status information, and the torque value, where the intervention coefficient indicates a weight of intervention of the torque value in the driving direction of the vehicle; determining a target value based on the torque value, the intervention coefficient, and an expected value, where the expected value indicates a steering direction and a steering angle that the vehicle expects to perform, and the target value indicates a steering direction and a steering angle that are used to control the driving direction of the vehicle; and controlling the driving direction of the vehicle based on the target value.

In other words, the vehicle may determine, based on the environment information, the vehicle status information, and the torque value, the weight of intervention of the torque value in the driving direction of the vehicle, and reconcile, based on the weight, the torque value applied by the driver to the steering wheel and an instruction torque (namely, the expected value) that is obtained through calculation based on an ADS and that indicates the steering direction and the steering angle that the vehicle expects to perform, to obtain a torque (namely, the target value) for finally controlling the direction of the vehicle; and then the driving direction of the vehicle may be controlled based on the torque.

For example, as shown in FIG. 1, the determining an intervention coefficient based on the environment information, the vehicle status information, and the torque value may include: obtaining a vehicle status intervention coefficient and a vehicle status takeover coefficient through calculation based on the vehicle status information; obtaining an environmental risk coefficient through calculation based on the environment information, where the environmental risk coefficient includes a left environmental risk coefficient or a right environmental risk coefficient; obtaining the intervention threshold through calculation based on the vehicle status intervention coefficient and the environmental risk coefficient, where the intervention threshold includes a left intervention threshold or a right intervention threshold, the left intervention threshold is obtained through calculation based on the left environmental risk coefficient, and the right intervention threshold is obtained through calculation based on the right environmental risk coefficient; obtaining the takeover threshold through calculation based on the vehicle status takeover coefficient; and obtaining the intervention coefficient through calculation based on the intervention threshold, the takeover threshold, and the torque value.

Optionally, the takeover threshold meets: $Tq_{TkOvr} = Tq_{base} \times P_{veh}^{TkOvr}$ (for ease of description, the formula is denoted as Formula 1), where $Tq_{TkOvr}$ indicates the takeover threshold, $P_{veh}^{TkOvr}$ indicates the vehicle status takeover coefficient, $Tq_{base}$ indicates a basic takeover coefficient, and $Tq_{base}$ is a preset constant.

In other words, after the vehicle status takeover coefficient is obtained based on the vehicle status information, the takeover threshold $Tq_{TkOvr}$ may be obtained through calculation according to Formula 1.

Optionally, the left intervention threshold meets: $Tq_{InRu}^{L} = Tq_{InRu}^{base} \times P_{env}^{L} \times P_{veh}^{InRu}$ (for ease of description, the formula is denoted as Formula 2), and the right intervention threshold meets: $Tq_{InRu}^{R} = Tq_{InRu}^{base} \times P_{env}^{R} \times P_{veh}^{InRu}$ (for ease of description, the formula is denoted as Formula 3), where $Tq_{InRu}^{L}$ indicates the left intervention threshold, $P_{env}^{L}$ indicates the left environmental risk coefficient, $Tq_{InRu}^{R}$ indicates the right intervention threshold, $P_{env}^{R}$ indicates the right environmental risk coefficient, $P_{veh}^{InRu}$ indicates the vehicle status intervention coefficient, $Tq_{InRu}^{base}$ indicates a basic intervention coefficient, and $Tq_{InRu}^{base}$ is a preset constant.

In other words, after the vehicle status intervention coefficient is obtained based on the vehicle status information, and the left environmental risk coefficient and the right environmental risk coefficient are obtained based on the environment information, the left intervention threshold $Tq_{InRu}^{L}$ may be obtained through calculation according to Formula 2, and the right intervention threshold $Tq_{InRu}^{R}$ may be obtained through calculation according to Formula 3.

Optionally, an intervention coefficient K meets:

$$K = \begin{cases} \dfrac{\left|Tq_{Driver}\right| - \left|Tq_{InRu}^{L}\right|}{Tq_{TkOvr} - \left|Tq_{InRu}^{L}\right|}, & Tq_{InRu}^{L} \leq Tq_{Driver} < Tq_{TkOvr} \\[3mm] \dfrac{\left|Tq_{Driver}\right| - \left|Tq_{InRu}^{R}\right|}{Tq_{TkOvr} - \left|Tq_{InRu}^{R}\right|}, & -Tq_{TkOvr} \leq Tq_{Driver} < Tq_{InRu}^{R} \\[3mm] 1, & \left|Tq_{Driver}\right| > Tq_{TkOvr} \\[2mm] 0, & Tq_{InRu}^{R} \leq Tq_{Driver} \leq Tq_{InRu}^{L} \end{cases}$$

(for ease of description, the formula is denoted as Formula 4), where K indicates the intervention coefficient, $Tq_{Driver}$ indicates the torque value, $Tq_{TkOvr}$ indicates the takeover threshold, $Tq_{InRu}^{L}$ indicates the left intervention threshold, and $Tq_{InRu}^{R}$ indicates the right intervention threshold.

In other words, after the intervention threshold and the takeover threshold are obtained, the intervention coefficient K may be obtained through calculation according to Formula 4.

The torque value $Tq_{Driver}$ may be a positive value or a negative value. By way of example, but not limitation, when the torque value $Tq_{Driver}$ is a positive value, it may indicate that a torque applied by the driver to the steering wheel is in an anticlockwise direction, that is, the driver expects to control the vehicle to drive to a left side; or when the torque value $Tq_{Driver}$ is a negative value, it may indicate that the torque applied by the driver to the steering wheel is in a clockwise direction, that is, the driver expects to control the vehicle to travel to a right side.

FIG. 3 is a diagram of a correspondence between a value of an intervention coefficient, and an intervention threshold and a takeover threshold.

As shown in FIG. 3, when $|Tq_{Driver}| > Tq_{TkOvr}$, K=1, that is, when the torque value applied by the driver to the steering wheel is greater than the takeover threshold, the value of the intervention coefficient is 1. When $Tq_{InRu}^{R} \leq Tq_{Driver} \leq Tq_{InRu}^{L}$, K=0, that is, when the torque value applied by the driver to the steering wheel is less than or equal to the intervention threshold, the value of the intervention coefficient is 0. When $Tq_{InRu}^{L} \leq Tq_{Driver} < Tq_{TkOvr}$, $K = \dfrac{\left|Tq_{Driver}\right| - \left|Tq_{InRu}^{L}\right|}{Tq_{TkOvr} - \left|Tq_{InRu}^{L}\right|}$ (for ease of description, the formula is denoted as Formula 5), that is, when the torque value is greater than the left intervention threshold but less than or equal to the takeover threshold, the value of the intervention coefficient is a number greater than 0 and less than 1. When $-Tq_{TkOvr} \leq Tq_{Driver} < Tq_{InRu}^{R}$, $K = \dfrac{\left|Tq_{Driver}\right| - \left|Tq_{InRu}^{R}\right|}{Tq_{TkOvr} - \left|Tq_{InRu}^{R}\right|}$ (for ease of description, the formula is denoted as Formula 6), that is, when the torque value is less than the right intervention threshold but greater than or equal to a negative value of the takeover threshold, the value of the intervention coefficient is a number greater than 0 and less than 1.

In a current vehicle direction takeover control method, when the torque applied by the driver to the steering wheel does not exceed a preset threshold, the driver feels hard when applying a force to the steering wheel, and the driving direction of the vehicle is not controlled by the driver; and only when the torque applied by the driver to the steering wheel exceeds the preset threshold, the driver feels that the force applied by the driver to the steering wheel changes abruptly. Subsequently, the torque applied by the driver to the steering wheel can control the driving direction of the vehicle, and the direction of the vehicle is completely controlled by the driver. In this vehicle direction takeover control method, when the driver takes over controlling on the steering wheel, a hand feel in a takeover process is not smooth enough, and there is a sense of abrupt change, resulting poor user experience.

However, in the foregoing implementation, $Tq_{InRu}^{L} \leq Tq_{Driver} < Tq_{TkOvr}$ and $-Tq_{TkOvr} \leq Tq_{Driver} < Tq_{InRu}^{R}$ may be understood as two smooth transition intervals. When the torque value $Tq_{Driver}$ exceeds the intervention threshold and is within ranges of the two smooth transition intervals, the driving direction of the vehicle is jointly controlled by the driver and the vehicle. When the torque value $Tq_{Driver}$ gradually increases until the torque value exceeds the takeover threshold, the driving direction of the vehicle is completely controlled by the driver. In a process in which the driver takes over controlling on the steering wheel, the intervention coefficient may vary with the torque value. In this process, there is no strong sense of abrupt change, and the hand feel is smooth, so that user experience can be improved.

In a possible implementation, the target value meets: $Tq\_sum = (1-K) \times Tq\_1 + K \times Tq_{Driver}$ (for ease of description, the formula is denoted as Formula 7), where $Tq\_sum$ indicates the target value, $Tq\_1$ indicates the expected value, $Tq_{Driver}$ indicates the torque value, $K$ indicates the intervention coefficient, and $0 \le K \le 1$.

FIG. 4 is a diagram of determining a target value according to an embodiment of this application.

As shown in FIG. 4, the ADS may output the intervention coefficient K and a steering angle instruction to an EPS system. The steering angle instruction may indicate the steering direction and the steering angle that the ADS expects the EPS system to perform, namely, the expected value $Tq\_1$. The EPS system may further receive the torque value $Tq_{Driver}$ applied by the driver to the steering wheel, so that the EPS system may obtain the target value $Tq\_sum$ through calculation according to Formula 7. Then, a motor in the EPS system may control the driving direction of the vehicle based on the target value $Tq\_sum$.

In a possible implementation, in a process in which the vehicle starts emergency braking or an intelligent driving system is in downgrading, the environmental risk coefficient is a default value.

As described above, as shown in FIG. 1, the apparatus 100 may further include the functional safety module 104. The functional safety module 104 may perform functional safety protection on the environmental risk coefficient based on an autonomous driving status of the vehicle. To be specific, when function downgrading occurs at a current autonomous driving level of the vehicle due to an emergency, or the environmental risk coefficient obtained by the impact factor evaluation module 101 through calculation is unreliable due to an exception of an environment monitoring module, the functional safety module 104 may set the environmental risk coefficient to the default value, to ensure that the driver can smoothly take over the vehicle in an emergency, so as to improve safety of intelligent driving.

Based on the foregoing technical solution, first, the takeover threshold on the steering wheel may be determined with reference to the vehicle status information of the vehicle in a driving process. Therefore, the takeover threshold on the steering wheel may vary with a vehicle status. For example, the takeover threshold may vary with a vehicle speed, and accordingly, difficulty for the driver in taking over the steering wheel may also vary. The takeover threshold on the steering wheel is no longer limited to a fixed takeover threshold, and may be adaptively adjusted based on different vehicle status information, to adapt to more driving scenarios and environments, so that intelligence is high.

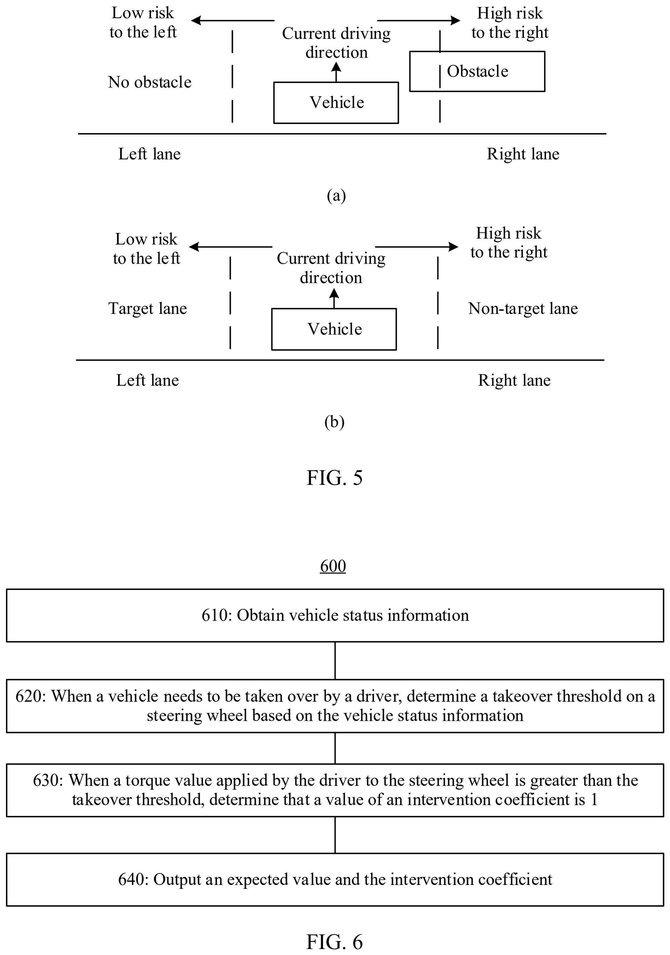

In addition, the environment information is introduced. In consideration of a fact that the left environmental risk and the right environmental risk may be different, the left intervention coefficient may be different from the right intervention coefficient. Intervention difficulty in the driving direction on a side with a larger value of the intervention coefficient is greater than that on a side with a smaller value of the intervention coefficient, to improve safety of taking over the steering wheel by the driver. For example, as shown in (a) in FIG. 5, there is an obstacle that intrudes a lane on the right side of the vehicle, and there is a high collision risk if the driver intervenes rightward. In this case, the value of the right intervention threshold obtained through calculation may be large, to give the driver specific resistance, so as to prevent the driver from turning right. If the driver insists on turning right, a force that exceeds the right intervention threshold needs to be used. There is no obstacle on the left side of the vehicle, there is a low risk if the driver intervenes in the vehicle leftward, and the vehicle may not collide with the obstacle. In this case, the value of the left intervention threshold obtained through calculation may be small, so that the driver is more easily to intervene in the steering wheel to turn left. For another example, as shown in (b) in FIG. 5, a target lane of the vehicle is a left lane, the ADS determines that a risk of leftward intervention is low, and the left lane meets a lane change condition. In this case, the value of the left intervention threshold obtained through calculation may be small, to help the driver complete lane change more quickly, that is, the driver is more easily to intervene in the steering wheel to turn left. A non-target lane of the vehicle is a right lane. If the driver intervenes rightward, this is opposite to a prompt and a lane change decision-making result determined by the ADS. Consequently, a series of problems such as missing an intersection and driving on a wrong lane may be caused. To avoid these problems, the value of the right intervention threshold obtained through calculation may be large, to give the driver specific resistance, so as to prevent the driver from turning right. If the driver insists on turning right, a force that exceeds the right intervention threshold needs to be used. Therefore, safety of taking over the steering wheel by the driver can be improved.

In addition, the smooth transition intervals are set. When the torque value exceeds the intervention threshold and is within the ranges of the smooth transition intervals, the driving direction of the vehicle is jointly controlled by the driver and the vehicle. When the torque value gradually increases until the torque value exceeds the takeover threshold, the driving direction of the vehicle is completely controlled by the driver. In the process in which the driver takes over controlling on the steering wheel, the intervention coefficient may vary with the torque value. In this process, there is no strong sense of abrupt change, and the hand feel is smooth, so that user experience can be improved.

In addition, a safety assurance measure is further set. When function downgrading occurs at the current autonomous driving level of the vehicle due to an emergency, or the environmental risk coefficient obtained through calculation is unreliable due to an exception of the environment monitoring module, the environmental risk coefficient may be set to the default value, to ensure that the driver can smoothly take over the vehicle in an emergency, so as to improve safety of intelligent driving.

FIG. 6 is another schematic flowchart of an intelligent driving method according to an embodiment of this application.

As shown in FIG. 6, the method 600 may include step 610 to step 640. The method 600 is applied to a vehicle. The method 600 may be performed by a component configured inside the vehicle, for example, a processor, a chip, or a chip system, or may be implemented by a logical module, software, or the like that has some or all functions of the vehicle. This is not limited in this application. The following describes in detail the steps in the method 600 by using an ADS as an example.

Step 610: Obtain vehicle status information.

It may be understood that a speed sensor, an angle sensor, and the like may be deployed on the vehicle. For example, the ADS may obtain a driving speed of the vehicle based on the speed sensor, and obtain a driving steering angle, an angle change rate, and the like of the vehicle based on the angle sensor. The vehicle status information includes but is not limited to data such as the speed, the steering angle, and the steering angle change rate of the vehicle.

Step 620: When the vehicle needs to be taken over by a driver, determine a takeover threshold on a steering wheel based on the vehicle status information.

When the vehicle is in an autonomous driving process, and the driver needs to take over the steering wheel of the vehicle, the ADS may determine the takeover threshold on the steering wheel based on the vehicle status information. In other words, the ADS may determine the takeover threshold on the steering wheel through calculation based on a current speed, a current steering angle, a current steering angle change rate, and the like of the vehicle.

By way of example, but not limitation, for example, the ADS may obtain the takeover threshold through calculation according to Formula 1 mentioned above.

Step 630: When a torque value applied by the driver to the steering wheel is greater than the takeover threshold, determine that a value of an intervention coefficient is 1.

As described above, the intervention coefficient indicates a weight of intervention of the torque value applied by the driver on the steering wheel in a driving direction of the vehicle. The ADS may obtain the torque value from a torque sensor on the steering wheel. When an EPS system is deployed on the vehicle, the ADS may obtain the torque value from the EPS system. This is not limited in this application.

As shown in FIG. 3, when the torque value exceeds the takeover threshold, the ADS may determine that the value of the intervention coefficient K is 1. In this case, the driving direction of the vehicle may be completely controlled by the driver.

In some possible implementations, when the torque value applied by the driver to the steering wheel is less than or equal to the takeover threshold, it is determined that the value of the intervention coefficient is 0.

When the torque value does not exceed the takeover threshold, the ADS may determine that the value of the intervention coefficient K is 0. In this case, the driving direction of the vehicle may be completely controlled by the vehicle.

In some possible implementations, the method 600 further includes: obtaining environment information of an environment in which the vehicle is located; when the vehicle needs to be taken over by the driver, determining an intervention threshold on the steering wheel based on the environment information; and when the torque value is greater than the intervention threshold and less than or equal to the takeover threshold, calculating the value of the intervention coefficient based on the environment information, the vehicle status information, and the torque value, where the value of the intervention coefficient is greater than 0 and less than 1; or when the torque value is less than or equal to the intervention threshold, determining that the value of the intervention coefficient is 0.

As described above, a visual sensor and the like may be deployed on the vehicle. For example, the vehicle may obtain, based on the visual sensor, the environment information of the environment in which the vehicle is located. The environment information includes but is not limited to obstacle information, lane information, and/or the like. For detailed descriptions, refer to the foregoing related descriptions. For brevity, details are not described herein again.

When the vehicle is in the autonomous driving process, and the driver needs to take over the steering wheel of the vehicle, the ADS may determine the intervention threshold on the steering wheel based on the environment information. In other words, the ADS may determine the intervention threshold on the steering wheel through calculation based on the obstacle information, the lane information, and/or the like.

When the vehicle is in the autonomous driving process, and the driver needs to take over the steering wheel of the vehicle, the ADS may determine the takeover threshold on the steering wheel based on the vehicle status information, and determine the intervention threshold on the steering wheel based on the information about the environment in which the vehicle is located. For example, after obtaining a vehicle status intervention coefficient based on the vehicle status information, and obtaining a left environmental risk coefficient and a right environmental risk coefficient based on the environment information, the ADS may obtain a left intervention threshold $Tq_{InRu}^{L}$ through calculation according to Formula 2, and obtain a right intervention threshold $Tq_{InRu}^{R}$ through calculation according to Formula 3.

In addition, as shown in FIG. 3, when the torque value applied by the driver to the steering wheel is small, and the torque value does not exceed the intervention threshold, the ADS may determine, according to Formula 4, that the value of the intervention coefficient is 0. When the torque value exceeds the intervention threshold but does not exceed the takeover threshold, that is, when the torque value is within the foregoing two smooth transition intervals, the ADS may calculate the value of the intervention coefficient based on the environment information, the vehicle status information, and the torque value. For example, the ADS may calculate the value of the intervention coefficient according to Formula 5 or Formula 6.

It may be understood that, in this implementation, when the torque value applied by the driver to the steering wheel is small, and the torque value does not exceed the intervention threshold, the torque value applied by the driver to the steering wheel cannot produce control effect on the driving direction of the vehicle, and the driving direction of the vehicle is still controlled by the vehicle; when the torque value exceeds the intervention threshold but does not exceed the takeover threshold, the driving direction of the vehicle is jointly controlled by the driver and the vehicle; and when the torque value exceeds the takeover threshold, the driving direction of the vehicle is completely controlled by the driver.

Step 640: Output an expected value and the intervention coefficient.

The expected value may be a value determined by the ADS based on the environment information, the vehicle status information, and the like when the driver does not apply a torque to the steering wheel. As described above, the expected value indicates a steering direction and a steering angle that the vehicle expects to perform, that is, the steering direction and the steering angle that the ADS expects the vehicle to perform.

After determining the value of the intervention coefficient, the ADS may output the expected value and the value of the intervention coefficient, so that the vehicle can reconcile the direction of the vehicle based on the two values, to determine a final driving direction.

In a possible implementation, the method 600 further includes: In a process in which the vehicle starts emergency braking or an intelligent driving system is in downgrading, the ADS sets an environmental risk coefficient to a default value.

As described above, when function downgrading occurs at a current autonomous driving level of the vehicle due to an emergency, or the environmental risk coefficient obtained through calculation is unreliable due to an exception of an environment monitoring module, the ADS may set the environmental risk coefficient to the default value, to ensure that the driver can smoothly take over the vehicle in an emergency, so as to improve safety of intelligent driving.

Based on the foregoing technical solution, first, the takeover threshold on the steering wheel may be determined with reference to the vehicle status information of the vehicle in a driving process. Therefore, the takeover threshold on the steering wheel may vary with a vehicle status. For example, the takeover threshold may vary with a vehicle speed, and accordingly, difficulty for the driver in taking over the steering wheel may also vary. The takeover threshold on the steering wheel is no longer limited to a fixed takeover threshold, and may be adaptively adjusted based on different vehicle status information, to adapt to more driving scenarios and environments, so that intelligence is high. In addition, the environment information is introduced. In consideration of a fact that the left environmental risk and the right environmental risk may be different, a left intervention coefficient may be different from a right intervention coefficient. Intervention difficulty in the driving direction on a side with a larger value of the intervention coefficient is greater than that on a side with a smaller value of the intervention coefficient, to improve safety of taking over the steering wheel by the driver. In addition, the smooth transition intervals are set. When the torque value exceeds the intervention threshold and is within ranges of the smooth transition intervals, the driving direction of the vehicle is jointly controlled by the driver and the vehicle. When the torque value gradually increases until the torque value exceeds the takeover threshold, the driving direction of the vehicle is completely controlled by the driver. In a process in which the driver takes over controlling on the steering wheel, the intervention coefficient may vary with the torque value. In this process, there is no strong sense of abrupt change, and a hand feel is smooth, so that user experience can be improved. In addition, a safety assurance measure is further set. When function downgrading occurs at the current autonomous driving level of the vehicle due to an emergency, or the environmental risk coefficient obtained through calculation is unreliable due to an exception of the environment monitoring module, the environmental risk coefficient may be set to the default value, to ensure that the driver can smoothly take over the vehicle in an emergency, so as to improve safety of intelligent driving.

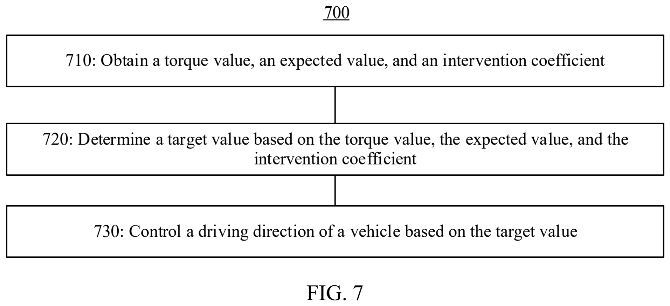

FIG. 7 is another schematic flowchart of an intelligent driving method according to an embodiment of this application.

As shown in FIG. 7, the method 700 may include step 710 to step 730. The method 700 is applied to a vehicle. The method 700 may be performed by a component configured inside the vehicle, for example, a processor, a chip, or a chip system, or may be implemented by a logical module, software, or the like that has some or all functions of the vehicle. This is not limited in this application. The following describes in detail the steps in the method 700 by using an EPS system as an example.

Step 710: Obtain a torque value, an expected value, and an intervention coefficient.

For example, the EPS system may obtain the torque value from a torque sensor on a steering wheel. The EPS system may receive, from an ADS, a steering direction and a steering angle that the ADS expects the EPS system to perform. The EPS system may receive, from the ADS, a value of the intervention coefficient determined by the ADS.

Step 720: Determine a target value based on the torque value, the expected value, and the intervention coefficient.

After obtaining the torque value, the expected value, and the intervention coefficient, the EPS system may determine the target value based on the torque value, the expected value, and the intervention coefficient.

For example, as shown in FIG. 4, the EPS system may obtain the target value through calculation according to Formula 7.

Step 730: Control a driving direction of the vehicle based on the target value.

As shown in FIG. 4, after the target value is calculated, a motor in the EPS system may control the driving direction of the vehicle based on the target value, for example, control a steering direction and a steering angle of a wheel of the vehicle.

Based on the foregoing technical solution, the takeover threshold on the steering wheel is no longer limited to a fixed takeover threshold, and may be adaptively adjusted based on different vehicle status information, to adapt to more driving scenarios and environments. The intervention coefficient is obtained based on a non-fixed takeover threshold and intervention threshold, so that intelligence is high. In addition, based on the intervention coefficient and in comprehensive consideration with the expected value and the torque value applied by the driver to the steering wheel, the driving direction of the vehicle may be jointly controlled by the driver and the vehicle, and may further response to a torque generated due to the torque value applied by the driver to the steering wheel while control precision is ensured, so that user experience can be improved.

An embodiment of this application provides an intelligent driving apparatus. The apparatus includes a processor, and the processor is configured to execute a program or instructions, to enable the apparatus to implement the method in any embodiment in FIG. 2, FIG. 6, or FIG. 7.

An embodiment of this application provides a vehicle. The vehicle includes an intelligent driving apparatus that can implement the method in any embodiment in FIG. 2, FIG. 6, or FIG. 7.

An embodiment of this application further provides a chip system. The chip system includes at least one processor, configured to implement a function in the method in any embodiment in FIG. 2, FIG. 6, or FIG. 7, for example, obtaining or processing data and/or information in the method.

In a possible design, the chip system further includes a memory. The memory is configured to store program instructions and data. The memory is located inside the processor or outside the processor.

The chip system may include a chip, or may include a chip and another discrete component.

An embodiment of this application further provides a computer program product. The computer program product includes a computer program (which may also be referred to as code or an instruction). When the computer program is run, a computer is enabled to perform the method in any embodiment shown in FIG. 2, FIG. 6, or FIG. 7.

An embodiment of this application further provides a computer-readable storage medium. The computer-readable storage medium stores a computer program (which may also be referred to as code or an instruction). When the computer program is run, a computer is enabled to perform the method in any embodiment shown in FIG. 2, FIG. 6, or FIG. 7.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly executed and accomplished by using a hardware decoding processor, or may be executed and accomplished by using a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data

**EP 4 678 497 A1**

rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Terms such as "unit" and "module" used in this specification may indicate computer-related entities, hardware, firmware, combinations of hardware and software, software, or software being executed.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In several embodiments provided in this application, it should be understood that the disclosed apparatus, device, and method may be implemented in other manners. For example, the described apparatus embodiment is merely an example, and there may be another division manner during actual implementation. For example, a plurality of units or components may be combined or integrated into another system, or some characteristic s may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement embodiments, all or some of embodiments may be implemented in a form of computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An intelligent driving method, comprising:

obtaining vehicle status information; and

when a vehicle needs to be taken over by a driver, determining a takeover threshold on a steering wheel based on the vehicle status information, wherein when a torque value applied by the driver to the steering wheel is greater than the takeover threshold, a driving direction of the vehicle is completely controlled by the driver.

2. The method according to claim 1, wherein when the torque value applied by the driver to the steering wheel is less than or equal to the takeover threshold, the driving direction of the vehicle is completely controlled by the vehicle.

3. The method according to claim 1, wherein the method further comprises:

obtaining environment information of an environment in which the vehicle is located; and

when the vehicle needs to be taken over by the driver, determining an intervention threshold on the steering wheel based on the environment information, wherein when the torque value is greater than the intervention threshold and less than or equal to the takeover threshold, the driving direction of the vehicle is jointly controlled by the driver and the vehicle; or when the torque value is less than or equal to the intervention threshold, the driving direction of the vehicle is completely controlled by the vehicle.

4. The method according to claim 3, wherein the method further comprises:

determining an intervention coefficient based on the environment information, the vehicle status information, and the torque value, wherein the intervention coefficient indicates a weight of intervention of the torque value in the driving direction of the vehicle;

determining a target value based on the torque value, the intervention coefficient, and an expected value, wherein the expected value indicates a steering direction and a steering angle that the vehicle expects to perform, and the target value indicates a steering direction and a steering angle that are used to control the driving direction of the vehicle; and

controlling the driving direction of the vehicle based on the target value.

5. An intelligent driving method, wherein the method comprises:

obtaining vehicle status information;

when a vehicle needs to be taken over by a driver, determining a takeover threshold on a steering wheel based on the vehicle status information;

when a torque value applied by the driver to the steering wheel is greater than the takeover threshold, determining that a value of an intervention coefficient is 1, wherein the intervention coefficient indicates a weight of intervention of the torque value in a driving direction of the vehicle; and

outputting an expected value and the intervention coefficient, wherein the expected value indicates a steering direction and a steering angle that the vehicle expects to perform.

6. The method according to claim 5, wherein the method further comprises:
when the torque value applied by the driver to the steering wheel is less than or equal to the takeover threshold, determining that the value of the intervention coefficient is 0.

7. The method according to claim 5, wherein the method further comprises:

obtaining environment information of an environment in which the vehicle is located;

when the vehicle needs to be taken over by the driver, determining an intervention threshold on the steering wheel based on the environment information; and

when the torque value is greater than the intervention threshold and less than or equal to the takeover threshold, calculating the value of the intervention coefficient based on the environment information, the vehicle status information, and the torque value, wherein the value of the intervention coefficient is greater than 0 and less than 1; or

when the torque value is less than or equal to the intervention threshold, determining that the value of the intervention coefficient is 0.

8. An intelligent driving method, wherein the method comprises:

obtaining a torque value, an expected value, and an intervention coefficient, wherein the torque value is a value of a torque generated by a force applied by a driver to a steering wheel, the expected value indicates a steering direction and a steering angle that a vehicle expects to perform, and the intervention coefficient indicates a weight of intervention of the torque value in a driving direction of the vehicle;

determining a target value based on the torque value, the expected value, and the intervention coefficient, wherein the target value indicates a steering direction and a steering angle that are used to control the driving direction of the vehicle; and

controlling the driving direction of the vehicle based on the target value.

9. An intelligent driving apparatus, wherein the apparatus comprises a processor, and the processor is configured to execute a program or instructions, to enable the apparatus to implement the method according to any one of claims 1 to 4.

10. The apparatus according to claim 9, wherein the apparatus is a vehicle.

11. An intelligent driving apparatus, wherein the apparatus comprises a processor, and the processor is configured to execute a program or instructions, to enable the apparatus to implement the method according to any one of claims 5 to 7.

12. The apparatus according to claim 11, wherein the apparatus is an advanced driving system ADS.

13. An intelligent driving apparatus, wherein the apparatus comprises a processor, and the processor is configured to execute a program or instructions, to enable the apparatus to implement the method according to claim 8.

14. The apparatus according to claim 13, wherein the apparatus is an electric power steering EPS system.

15. A vehicle, comprising the apparatus according to claim 11 or 12 and the apparatus according to claim 13 or 14.

16. A computer-readable storage medium, wherein the computer-readable storage medium stores instructions, and when the instructions are run on a computer, the computer is enabled to perform the method according to any one of claims 1 to 8.

17. A computer program product, wherein the computer program product comprises a computer program, and when the computer program is run, a computer is enabled to perform the method according to any one of claims 1 to 8.

Apparatus 100

Vehicle status information

Environment interaction decision-making result or the like

Road-level decision-making result or the like

Impact factor evaluation module 101

Obtain a vehicle status intervention coefficient and a vehicle status takeover coefficient based on the vehicle status information

Obtain an environmental risk coefficient through quantization based on obstacle information or the like

Obtain an environmental risk coefficient through quantization based on lane information or the like

Comprehensively quantify the environmental risk coefficient

Functional safety module 104

Perform functional safety protection on the environmental risk coefficient

Intervention coefficient evaluation module 102

Obtain a takeover threshold based on the vehicle status takeover coefficient; and obtain an intervention threshold based on the vehicle status intervention coefficient and the environmental risk coefficient

Obtain an intervention coefficient based on the intervention threshold, the takeover threshold, and the torque value

Torque value

Steering system execution module 103

Obtain a target value based on the intervention coefficient, an expected value, and the torque value

FIG. 1

200

| 210: Obtain vehicle status information |
|---|

| 220: When a vehicle needs to be taken over by a driver, determine a takeover threshold on a steering wheel based on the vehicle status information |
|---|

FIG. 2

$$K=1 \quad 0<K<1 \quad K=0 \quad 0<K<1 \quad K=1$$

$$-Tq_{TkOvr} \quad Tq_{InRu}^{R} \quad 0 \quad Tq_{InRu}^{L} \quad Tq_{TkOvr}$$

FIG. 3

EPS system

ADS

$Tq\_1$ → $1-K$ → $(1-K)\times Tq\_1$

$K$ → $0 \leq K \leq 1$

Driver

$Tq_{Driver}$ → $K$ → $K\times Tq_{Driver}$

$+$ → $Tq\_sum$ → Motor control

FIG. 4

Low risk to the left ← Current driving direction High risk to the right

No obstacle

Vehicle

Obstacle

Left lane

Right lane

(a)

Low risk to the left ← Current driving direction High risk to the right

Target lane

Vehicle

Non-target lane

Left lane

Right lane

(b)

FIG. 5

600

610: Obtain vehicle status information

620: When a vehicle needs to be taken over by a driver, determine a takeover threshold on a steering wheel based on the vehicle status information

630: When a torque value applied by the driver to the steering wheel is greater than the takeover threshold, determine that a value of an intervention coefficient is 1

640: Output an expected value and the intervention coefficient

FIG. 6

<u>700</u>

| 710: Obtain a torque value, an expected value, and an intervention coefficient |
| --- |

| 720: Determine a target value based on the torque value, the expected value, and the intervention coefficient |
| --- |

| 730: Control a driving direction of a vehicle based on the target value |
| --- |

FIG. 7

## INTERNATIONAL SEARCH REPORT

| International application No. |
|---|
| **PCT/CN2024/078614** |

| A. | CLASSIFICATION OF SUBJECT MATTER |
|---|---|

B60W60/00(2020.01)i; B60W50/08(2020.01)i; B60W40/09(2012.01)i; G05D1/00(2024.01)i

According to International Patent Classification (IPC) or to both national classification and IPC

| B. | FIELDS SEARCHED |
|---|---|

Minimum documentation searched (classification system followed by classification symbols)

IPC: B60W; G05D

Documentation searched other than minimum documentation to the extent that such documents are included in the fields searched

Electronic data base consulted during the international search (name of data base and, where practicable, search terms used)

CNTXT, CNABS, ENTXT, VCN, VEN, DWPI, WPABS, CNKI: 智能驾驶, 自动驾驶, 辅助驾驶, 接管, 干预, 门限, 阈值, 极限, 动态, 实时, 调整, 力矩, autonomous, takeover, intervene, threshold, limit, dynamic, real-time, adjust, adapt, torque

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2018233777 A1 (CONTINENTAL TEVES AG. & CO., OHG) 27 December 2018 (2018-12-27) description, pages 7-12 | 1, 2, 5, 6, 9-12, 16, 17 |
| Y | WO 2018233777 A1 (CONTINENTAL TEVES AG. & CO., OHG) 27 December 2018 (2018-12-27) description, pages 7-12 | 3, 4, 7, 15 |
| Y | CN 105988467 A (TOYOTA MOTOR CORP.) 05 October 2016 (2016-10-05) description, paragraphs 6-28 | 3, 4, 7 |
| X | CN 111409695 A (ANHUI KASIPU INTELLIGENT TECHNOLOGY CO., LTD.) 14 July 2020 (2020-07-14) description, paragraphs 85-137 | 8, 13, 14 |
| Y | CN 111409695 A (ANHUI KASIPU INTELLIGENT TECHNOLOGY CO., LTD.) 14 July 2020 (2020-07-14) description, paragraphs 85-137 | 4,15 |
| A | CN 105984485 A (TOYOTA MOTOR CORP.) 05 October 2016 (2016-10-05) entire document | 1-17 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 April 2024** | **22 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/078614**

### C. DOCUMENTS CONSIDERED TO BE RELEVANT

| Category* | Citation of document, with indication, where appropriate, of the relevant passages | Relevant to claim No. |
|---|---|---|
| A | CN 114248805 A (ZHONGTONG BUS HOLDING CO., LTD.) 29 March 2022 (2022-03-29)<br>entire document | 1-17 |
| A | CN 115503731 A (SINOTRUK JINAN POWER CO., LTD.) 23 December 2022 (2022-12-23)<br>entire document | 1-17 |
| A | US 2019023319 A1 (JAGUAR LAND ROVER LTD.) 24 January 2019 (2019-01-24)<br>entire document | 1-17 |

Form PCT/ISA/210 (second sheet) (July 2022)

**INTERNATIONAL SEARCH REPORT**
Information on patent family members

International application No.

**PCT/CN2024/078614**

| Patent document cited in search report | | | Publication date (day/month/year) | Patent family member(s) | | | Publication date (day/month/year) |
|---|---|---|---|---|---|---|---|
| WO | 2018233777 | A1 | 27 December 2018 | DE | 112018000307 | A5 | 02 October 2019 |
| | | | | DE | 102017210299 | A1 | 20 December 2018 |
| CN | 105988467 | A | 05 October 2016 | US | 2016280236 | A1 | 29 September 2016 |
| | | | | US | 9914463 | B2 | 13 March 2018 |
| | | | | JP | 2016175613 | A | 06 October 2016 |
| | | | | JP | 6304086 | B2 | 04 April 2018 |
| | | | | EP | 3072770 | A1 | 28 September 2016 |
| | | | | EP | 3072770 | B1 | 26 December 2018 |
| CN | 111409695 | A | 14 July 2020 | None | | | |
| CN | 105984485 | A | 05 October 2016 | JP | 2016175614 | A | 06 October 2016 |
| | | | | JP | 6269546 | B2 | 31 January 2018 |
| | | | | US | 2016280235 | A1 | 29 September 2016 |
| | | | | US | 9802623 | B2 | 31 October 2017 |
| | | | | EP | 3072766 | A2 | 28 September 2016 |
| | | | | EP | 3072766 | A3 | 05 October 2016 |
| | | | | EP | 3072766 | B1 | 16 September 2020 |
| CN | 114248805 | A | 29 March 2022 | None | | | |
| CN | 115503731 | A | 23 December 2022 | None | | | |
| US | 2019023319 | A1 | 24 January 2019 | WO | 2017178330 | A1 | 19 October 2017 |
| | | | | GB | 2549328 | A | 18 October 2017 |
| | | | | US | 11724738 | B2 | 15 August 2023 |
| | | | | DE | 112017002002 | T5 | 10 January 2019 |
| | | | | US | 2023382454 | A1 | 30 November 2023 |

Form PCT/ISA/210 (patent family annex) (July 2022)

**EP 4 678 497 A1**

**Patent documents cited in the description**

- CN 202310389188